# EUROPÄISCHE PATENTANMELDUNG

(11) **EP 4 102 378 A1**
(43) Veröffentlichungstag der Anmeldung: **14.12.2022**
(21) Anmeldenummer: 21178967.2
(22) Anmeldetag: 11.06.2021
(51) Int. Cl.: G06F 16/25

(54) **VERFAHREN ZUR NEUORGANISATION UND/ODER TRANSFORMATION VON DATEN**

(71) Anmelder: Data Transformer GmbH, 51377 Leverkusen (DE)
(72) Erfinder: Griffel, Claude, 905701 Navodari (RO)
(74) Vertreter: Fabry, Bernd

(57) **Zusammenfassung**

Vorgeschlagen wird ein Verfahren zur Neuorganisation und/oder Transformation von Daten, bei dem Ursprungsdaten von einem Nutzer an ein externes System übermittelt werden, die dann gemäß den in diesem System hinterlegten Transformnationsschema umgewandelt und an ein ebenfalls hinterlegtes Zielsystem gesendet werden.

## Beschreibung

### Gebiet der Erfindung

Die Erfindung befindet sich auf dem Gebiet der Informationstechnologie und betrifft ein neues internet-basiertes Verfahren zur automatischen Neuorganisation bzw. Transformation von Daten.

### Technologischer Hintergrund

Ein immer wiederkehrende Schwierigkeit bei der Verarbeitung elektronischer Daten besteht darin, dass ein System A Daten in Tabellenform z.B. als Excel oder als CSV Datei liefert, ein System B, das diese Daten verarbeiten soll, diese zwar ebenfalls in Tabellenform, aber anders organisiert und teilweise transformiert benötigt. Werte der Kolonne "X" der Ursprungsdatei müssen beispielsweise gesplittet und in zwei verschiedenen Kolonnen der Zieldatei untergebracht werden. Oder die Werte von zwei Kolonnen der Ursprungsdatei müssen zusammengezogen und in einer Kolonne der Zieldatei vereinigt werden. Häufig müssen Werte auch einfach nur umformatiert oder nach gewissen Regeln transformiert werden. Auch die Kolonnenbezeichner sind mitunter nicht dieselben.

Bei der Telefonakquise werden beispielsweise in Callcentern täglich viele Daten von potenziellen Kunden für ein Produkt oder für einen Service erfasst, und das System des Callcenters produziert dann jeweils abends eine Datei mit in Tabellen angeordneten Daten. Wenn das System des Auftraggebers, beispielsweise eine Versicherungsgesellschaft, eben diese Daten anders angeordnet benötigt, gibt es ein Problem.

Für eine solche Neuorganisation bzw. Transformation von Daten werden Programmierer benötigt, denen genau spezifiziert werden muss, wie die Daten umzuorganisieren und zu transformieren sind. Häufig ist das ein mühsamer repetitiver Prozess, bei dem man sich der korrekten oder optimalen Lösung nur Schritt für Schritt annähert. Zudem haben kleine, aber auch mittelgrosse Unternehmen häufig keine Inhouse-Kapazitäten für solche Arbeiten und müssen externe Software-Entwickler einschalten, was zeitaufwendig und kostspielig ist. Für ein Callcenter kann das häufig bedeutet, dass man einen Auftrag nicht annehmen kann und diesen Auftrag und möglicherweise auch den Kunden verliert.

### Stand der Technik

CN 101686257 A (BEIJING ZHANGYIXUN MOBILE SOFTWARE TECHNOLOGY CO) bezieht sich auf ein mobiles Kommunikationssystem, insbesondere auf ein Datentransformationssystem. Die Erfindung ist dadurch gekennzeichnet, dass das Datentransformationssystem eine grundlegende Informationsverwaltungsplattform, eine Verwaltungs- und Wartungsplattform, eine Benutzerverwaltungsplattform, eine Plattform zur Unterstützung der Teamarbeit, eine Plattform zur Erzeugung von Berichtsformularen und ein Datentransformationssystem umfasst. Das System verwendet eine große Anzahl von intelligenten Optimierungsalgorithmen und -modellen, um Optimierungsmittel für Schlüsselverbindungen der Datenverarbeitung und Datenanalyse bereitzustellen und die Effizienz stark zu verbessern.

US 10579622 **BA** (TRANSDATA SOLUTIONS) betrifft ein Datenverwaltungssystem zur Verarbeitung elektronischer Dateien. Das Datenverwaltungssystem umfasst mindestens eine Datenquelle, wobei die mindestens eine Datenquelle mindestens eine Spalte mit einer oder mehreren Zeilen mit alphanumerischen Werten und, in einer Ausführungsform, mindestens zwei Dateneingabesätze aufweist, wobei die Dateneingabesätze eine oder mehrere Spalten aufweisen, wobei jede Spalte eine oder mehrere Zeilen mit alphanumerischen Werten aufweist, wobei jeder alphanumerische Wert ein Etikett aufweist, das nur mit diesem alphanumerischen Wert verbunden ist. Mindestens ein Datentransformationsknoten ist zum "Ziehen" aus einem der mindestens einen Dateneingabesätze und zur Durchführung einer Operation an diesem Dateneingabesatz geeignet.

### Aufgabe der Erfindung

Die Aufgabe der Erfindung hat darin bestanden, den oben geschilderten Nachteilen des Stands der Technik abzuhelfen. Insbesondere war es Ziel, ein Verfahren zur Verfügung zu stellen, bei dem Nutzer auf einfachem Wege in einem Designer (auf einer graphischen Benutzeroberfläche) bestimmen können, wie die Daten neu zu organisieren bzw. zu transformieren sind - und das System dann aufgrund von diesen Transformationsregeln, die Daten selbständig umorganisiert bzw. transformiert.

### Beschreibung der Erfindung

Die vorliegende Erfindung betrifft ein Verfahren zur Neuorganisation und/oder Transformation von Daten, bestehend aus oder umfassend die folgenden Schritte:
(i) Bereitstellen einer über das Internet erreichbaren und zur Datenerfassung und Datenverarbeitung geeigneten Web-Applikation (W) und
(ii) Bereitstellen eines über das Internet erreichbaren FTP Servers (S) bei dem
   (a) ein Nutzer (N) seine persönlichen Nutzerdaten - die auch die Daten des Unternehmens umfassen können - an die Web-Applikation übermittelt, die diese in einer externen Datenbank (DB) speichert;
   (b) mit den so gespeicherten Nutzerdaten automatisch eine nutzerspezifische FTP-Infrastruktur (NI) auf dem FTP Server (S) erzeugt wird;
   (c) der Nutzer (N)
      (c1) mit Hilfe der Web-Applikation (W) ein Transformationsschema (T) für seine neu zu organisierenden und/oder zu transformierenden Daten (D) erstellt; und
      (c2) ein Zielsystem (Z) definiert, an das die neu zu organisierenden und/oder zu transformierenden Daten gesendet werden sollen; wobei
      (c3) das Transformationsschema (T) sowie die Angaben zum Zielsystem (Z) von der Web-Applikation in der Datenbank (DB) speichert werden;
   (d) der Nutzer - gleichbedeutend auch das System des Nutzers oder des entsprechenden Unternehmens - die neu zu organisierenden und/oder zu transformierenden Daten (D) an den FTP-Server (S) weiterleitet und in der nutzerspezifischen FTP-Infrastruktur (NI) bzw. einem Unterverzeichnis derselben speichert;
   (e) der FTP-Server (S) die neu zu organisierenden und/oder zu transformierenden Daten (D) gemäß dem in der Datenbank (DB) hinterlegten Transformationsschema (T) neu organisiert und/oder transformiert und an das hinterlegte Zielsystem (Z) sendet.

Mit Hilfe des erfindungsgemäßen Verfahrens lassen sich insbesondere Daten, die in Tabellen bzw. im Format CSV, XLS oder XLSX vorliegen einfach, schnell und regelmäßig neu organisieren bzw. transformieren und an ein beliebiges vorgegebenes Zielsystem senden.

### Komponente (i): eine über das Internet erreichbare Web-Applikation

Die Web-Applikation (W) ist die Kommunikationsschnittstelle zwischen dem Nutzer (N), der die Transformationsschemen erstellt und bestimmt wohin die neu organisierten und/oder transformierten Daten gesendet werden sollen, und der Datenbank (DB).

Im ersten Schritt muss sich der Nutzer (N) registrieren. Dies geschieht, indem er seine persönlichen Daten in der Web-Applikation erfasst. Diese speichert die Informationen in einer Datenbank (DB) ab, auf die auch Komponente ii, nämlich FTP Server (S) (bzw. die darauf laufenden Programme) Zugriff hat. Der Begriff des Nutzers umfasst dabei nicht nur die persönlichen Informationen, sondern auch die entsprechenden Informationen über das zugehörige Unternehmen. Die Benutzerdaten werden dann insgesamt in der Datenbank (DB) gespeichert.

Im zweiten Schritt legt der Nutzer fest, in welcher Weise seine Ursprungsdaten regelmäßig neu organisiert oder transformiert werden sollen. Der Nutzer hat beispielsweise die Möglichkeit zunächst ein Beispiel der Ursprungsdatei und ein Beispiel der Zieldatei im System hochzuladen. Die in Tabellen angeordneten Daten beider Dateien werden dann in geeigneter Form dargestellt. Das System erkennt bei beiden Dateien automatisch um welchen Dateityp es sich handelt (CSV, XLS, XLSX). Wird ein Dateityp nicht unterstützt, wird er gar nicht erst hochgeladen.

Das System erlaubt es sodann in völlig intuitiver Weise beispielsweise mittels Drag & Drop und einigen Klicks mit Hilfe einer Software ("Designer") zu definieren, wie die angeordneten Daten neu zu organisieren und zu transformieren sind. Das System erlaubt es, spielerisch und formulargesteuert Transformationsregeln zu erstellen und umzuformulieren, bis die Transformation exakt das gewünschte Ergebnis liefert. Ist auf diese Art und Weise der Algorithmus einmal definiert, kann er als Transformationsschema (Template) im System gespeichert werden. Jedes Transformationsschema wird automatisch auch einem FTP Unterverzeichnis auf dem FTP Server zugeordnet (Komponente ii). Die Daten des Transformationsschemas werden zusammen mit den Kundendaten in einer Datenbank eines durch die Applikation erreichbaren Servers gespeichert. Die Hardware der Web-Applikation und der Datenbank ist beispielsweise ein Windows Server oder ein Linux Server.

### Komponente ii: ein über das Internet erreichbarer FTP Server

Immer dann, wenn in der Web-Applikation (Komponente i) eine neue Firma angelegt wird (Nutzer plus Firma), wird automatisch auf dem FTP Server ein firmenspezifischer, passwortgeschützter Account mit Unterverzeichnissen erstellt. Das erste Transformationsschema und jedes weitere, das von einem Nutzer dieser Firma in der Web-Applikation erstellt wird, werden dann diesen Unterverzeichnissen dynamisch zugeordnet. Alle Arbeiten, die normalerweise in diesem Zusammenhang von einem IT-Administrator gemacht würden, erfolgen automatisch. Die verwendete Hardware ist vorzugsweise ein Windows Server, der es möglich macht, insbesondere folgende Routinen automatisch durchzuführen:
- Erstellen von Verzeichnissen und Unterverzeichnissen gemäss Angaben, die von der Web-Applikation kommen und in der DB gespeichert sind
- Erstellen von Systembenutzern mit Passwörtern, und Vergabe von Lese- und Schreib-Rechten an diese Systembenutzer bezüglich der Verzeichnisse und Unterverzeichnisse die unter Punkt 1 erstellt wurden
- Erstellen von Authorisierungsregeln, so dass beim Zugriff über das Web nur die entsprechend zugewiesenen Verzeichnisse und Unterverzeichnisse sichtbar sind

Wird dann eine Datei (Excel oder CSV) im Ursprungsformat im Eingangs FTP Unterverzeichnis des Servers abgelegt, nämlich dem, welches einem bestimmten Transformationsschema zugewiesen ist, dann werden die Daten dieser Datei - entsprechend der im Transformationsschema definierten Logik - umorganisiert und transformiert und im Ziel FTP Verzeichnis als Excel oder CSV Datei abgelegt.

Dabei wird durch das System überprüft, ob die Datei, die in ein bestimmtes Unterverzeichnis des Servers kopiert wird, vom Datenaufbau her genau mit der Beispieldatei übereinstimmt, die ursprünglich im Zusammenhang mit eben diesem Transformationsschema hochgeladen wurde. Auch der Dateityp muss der gleiche sein.

Die Dateien, die das System von **Firma A** produziert, werden also ausschließlich in das der Firma A zugeordnete - genauer, einem spezifischen Transformationsschema der Firma A zugeordnete - FTP Unterverzeichnis des FTP Servers abgelegt. Dieser transformiert die Daten der Dateien entsprechend Transformationsschema und kopiert die Dateien mit den transformierten Daten dann ins FTP Verzeichnis des Zielsystems, beispielsweise der **Firma B.**

Der Server ist wie oben beschrieben so eingerichtet, dass jedes firmenpezifische FTP-Verzeichnis durch Passwort geschützt ist. Das System der Firma kann unverschlüsselt mit dem FTP-Server kommunizieren, oder via explicit FTPS oder via implicit FTPS. Der Server erkennt selbständig, ob verschlüsselt oder unverschlüsselt mit ihm kommuniziert wird, und im Fall von verschlüsselter Kommunikation, ob explicit oder implicit FTPS genutzt wird.

Auf der Output Seite, dort wo die Datei mit den transformierten Daten an das Zielsystem weitergeleitet wird, das die transformierten Daten erhalten soll, ist es ähnlich, nur muss dem FTP-Server mitgeteilt werden, ob unverschlüsselt, via explicit FTPS oder via implicit FTPS kommuniziert werden soll. Dort, in der Web-Applikation, in der das Transformationsschema erstellt wird, kann auch angegeben werden, wie mit dem System, das die Dateien mit den transformierten Daten erhalten soll, kommuniziert werden soll: unverschlüsselt oder verschlüsselt, und wenn verschlüsselt, unter Verwendung von welcher Verschlüsselungstechnik.

### BEISPIELE

Das erfindungsgemäße Verfahren wird durch die Fließschemata 1 bis 3 näher beschrieben, ohne es darauf einzuschränken. Dabei wurde der Prozess in drei Teilschritte untergliedert:

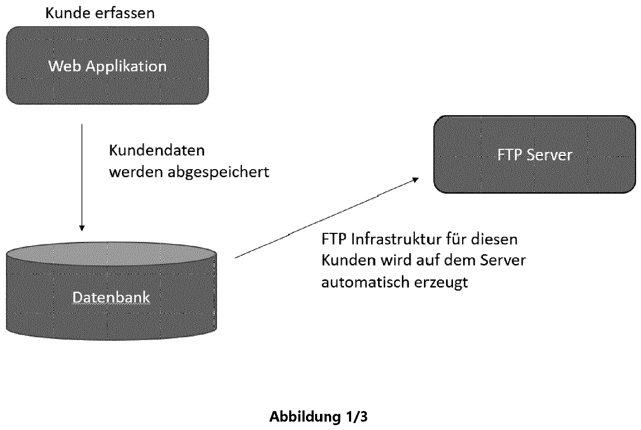

### Abbildung 1 - Erfassung der persönlichen Nutzerdaten (inkl. Firmendaten)

Dieser Teil des Prozesses umfasst das Anlegen von neuen Nutzern im System. Nach Übermittlung der nutzerspezifischen/firmenspezifischen Daten wird auf dem FTP-Server eine nutzerspezifische FTP-Infrastruktur (NI) (= Account) angelegt und ein Password vergeben, so dass die vom Kunden in der Folge übermittelten Daten jeweils nur in seinem Account abgespeichert werden können.

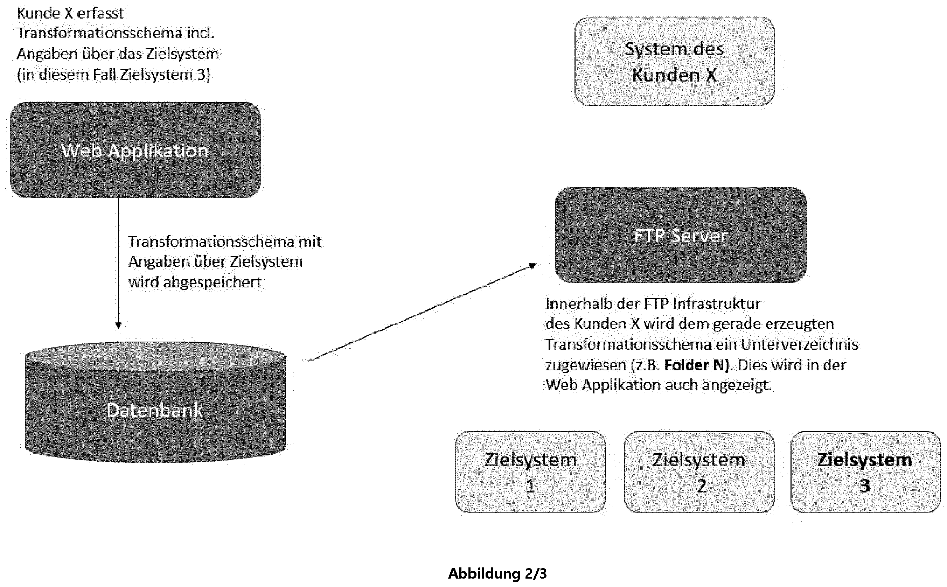

### Abbildung 2 - Erfassen des Transformationsschemas (T)

Dieser Teil des Prozesses umfasst die Festlegung in welcher Weise alle zukünftig übermittelten Daten neu zu organisierenden oder zu transformierenden sind. Das Transformationsschema, das mit Hilfe der Web-Applikation (W) definiert wird, wird zusammen mit der Angabe des Zielsystems in der Datenbank abgespeichert.

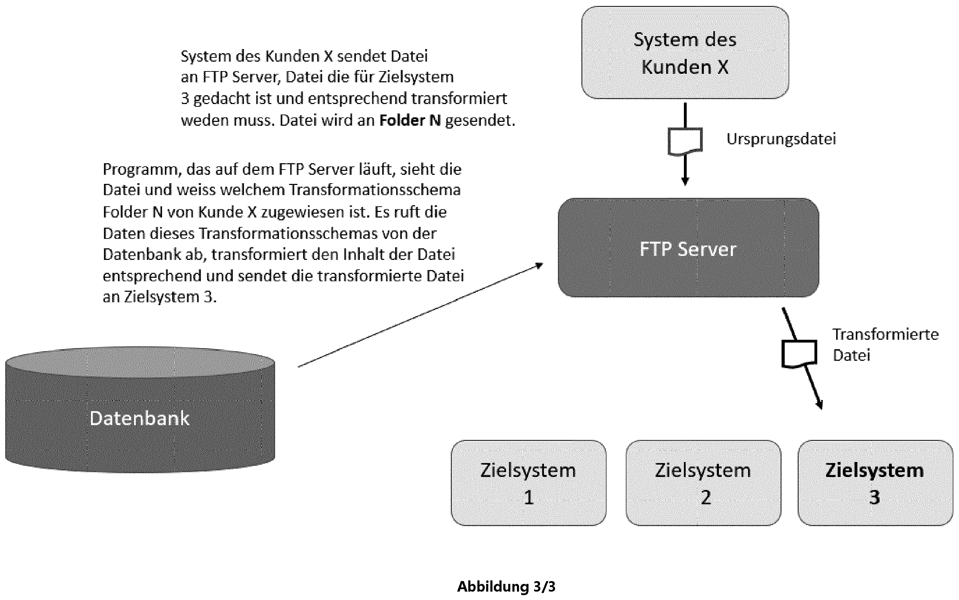

### Abbildung 3 - Datenkonversion und Übertragung

Im letzten Teil des Prozesses sendet das System des Kunden die zu bearbeitenden Daten an den FTP-Server (S). Das Programm, das auf dem FTP Server läuft, sieht die Datei und weiss welchem Transformationsschema Folder N von Kunde X zugewiesen ist. Es ruft die Daten dieses Transformationsschemas von der Datenbank ab, transformiert den Inhalt der Datei entsprechend und sendet die transformierte Datei an Zielsystem 3.

## Patentansprüche

1. Verfahren zur Neuorganisation und/oder Transformation von Daten, bestehend aus oder umfassend die folgenden Schritte:
(i) Bereitstellen einer über das Internet erreichbaren und zur Datenerfassung und Datenverarbeitung geeigneten Web-Applikation (W) und
(ii) Bereitstellen eines über das Internet erreichbaren FTP Servers (S) bei dem
(a) ein Nutzer (N), seine persönlichen Nutzerdaten - die auch die Daten des Unternehmens umfassen können - an die Web-Applikation übermittelt, die diese in einer externen Datenbank (DB) speichert;
(b) mit den so gespeicherten Nutzerdaten automatisch eine nutzerspezifische FTP-Infrastruktur (NI) auf dem FTP Server (S) erzeugt wird;
(c) der Nutzer (N)
(c1) mit Hilfe der Web-Applikation (W) ein Transformationsschema (T) für seine neu zu organisierenden und/oder zu transformierenden Daten (D) erstellt; und
(c2) ein Zielsystem (Z) definiert, an das die neu zu organisierenden und/oder zu transformierenden Daten gesendet werden sollen; wobei
(c3) das Transformationsschema (T) sowie die Angaben zum Zielsystem (Z) von der Web-Applikation in der Datenbank (DB) speichert werden;
(d) der Nutzer - gleichbedeutend auch das System des Nutzers oder des entsprechenden Unternehmens - die neu zu organisierenden und/oder zu transformierenden Daten (D) an den FTP-Server (S) weiterleitet und in der nutzerspezifischen FTP-Infrastruktur (NI) bzw. einem Unterverzeichnis derselben speichert;
(e) der FTP-Server (S) die neu zu organisierenden und/oder zu transformierenden Daten (D) gemäß dem in der Datenbank (DB) hinterlegten Transformationsschema (T) neu organisiert und/oder transformiert und an das hinterlegte Zielsystem (Z) sendet.

2. Verfahren nach Anspruch 1, **dadurch gekennzeichnet, dass** die Daten in Tabellen angeordnet sind.

3. Verfahren nach den Ansprüchen 1 und/oder 2, **dadurch gekennzeichnet, dass** die Daten im Format CSV, XLS oder XLSX vorliegen.

4. Verfahren nach den Ansprüchen 1 bis 3, **dadurch gekennzeichnet, dass** die Kommunikation mit dem FTP-Server verschlüsselt oder unverschlüsselt erfolgt.

5. Verfahren nach mindestens einem der Ansprüche 1 bis 4, **dadurch gekennzeichnet, dass** jedes Transformationsschema (T1 bis T...) jeweils einem Unterverzeichnis der nutzerspezifischen FTP-Infrastruktur zugeordnet wird.
